Europäisches Patentamt

European Patent Office

Office européen des brevets

(19)

(11) **EP 1 230 056 B1**

(12) ## EUROPEAN PATENT SPECIFICATION

(45) Date of publication and mention
of the grant of the patent:
**03.09.2003 Bulletin 2003/36**

(21) Application number: **00936573.5**

(22) Date of filing: **23.05.2000**

(51) Int Cl.⁷: **B22F 9/00**

(86) International application number:
**PCT/BR00/00057**

(87) International publication number:
**WO 00/073002 (07.12.2000 Gazette 2000/49)**

(54) **PLASMA PROCESS FOR REMOVING A BINDER FROM PARTS OBTAINED BY POWDER INJECTION MOLDING**

PLASMAEXTRAKTION VON BINDEMITTEL IN DURCH PULVERSPRITZGIESSEN HERGESTELLTEN FORMKÖRPERN

PROCEDE D'EXTRACTION PAR PLASMA DE LIANT DANS DES PIECES MOULEES PAR INJECTION DE POUDRES

(84) Designated Contracting States:
**AT BE CH CY DE DK ES FI FR GB GR IE IT LI LU MC NL PT SE**

(30) Priority: **27.05.1999 BR 9901512**

(43) Date of publication of application:
**14.08.2002 Bulletin 2002/33**

(73) Proprietor: **Lupatech S.A.**
**95112-090 Caxias do Sul, RS (BR)**

(72) Inventors:
• **KLEIN, Aloisio Nelmo**
**CEP-88040-900 Florianúpolis, SC (BR)**
• **MUZART, Joel Louiz R.**
**CEP-88040-900 Florianúpolis, SC (BR)**
• **SOUZA, Antonio Rogério**
**CEP-88040-900 Florianúpolis, SC (BR)**
• **FREDEL, Marcio Celso**
**CEP-88040-900 Florianúpolis, SC (BR)**
• **WENDHAUSEN, Paulo Antonio Pereira**
**CEP-88040-900 Florianúpolis, SC (BR)**
• **RUBENS, Maribondo do Nascimento**
**CEP-88040-900 Florianúpolis, SC (BR)**

(74) Representative: **Elzaburu, Alberto de et al**
**Elzaburu S.A.**
**Miguel Angel, 21**
**28010 Madrid (ES)**

(56) References cited:
**GB-A- 2 106 142**          **US-A- 4 022 872**

## Description

The invention concerns a thermochemichal process for binder removal from pieces obtained by injection moulding of metallic and/or ceramic powders, which uses electric discharge in an environment containing hydrogen or other atomic or molecular gas at low pressure to produce reactive species and for the heating of the pieces, causing the binder removal contained inside the pieces in much smaller times than the conventional processes.

The techniques of powder metallurgy are very efficient as they involve technological and economically competitive aspects in the production in series of pieces of complex geometry made of iron and steel and other metals. In these techniques, the injection of metallic and/or ceramic powders with organic binder mixtures, in molds, is one of the most promising. Even so, the removal of these organic binders after the injection, before processing the final sintering, is still a limiting factor, because the existent extraction processes demand an excessively long processing time, coming close to dozens of hours, reducing the productivity, and thus, raising the products price obtained by the technology of molding powders by injection. The processes of binder extraction used today, besides demanding an excessively long time, are polluting, because they liberate short chains hydrocarbons or they involve their burning, producing residues, for example, carbon monoxide. The most commonly used binders are mixtures of waxes and other polymers, for example, polyethylene, polypropylene and polyacetate.

In the process of binder extraction by plasma, object of this patent application, there is a reduced formation of gases, which are formed essentially by long chains hydrocarbons gases, predominantly methane, without any oxygen burns, avoiding liberation of carbon monoxide.

Processes where the plasma technology is used now include nitriding, carbonitriding, cementation, oxidation, sintering, among others. The piece heating happens by cathode sputtering. The cathode acts as the piece support, the piece is bombarded by ions together with the cathode and consequently it becomes warm. The pieces heating happens because the electric discharge of the cathode is linked to the negative voltage of a source of high tension, the ions are strongly accelerated in the electric field cathode sheath in direction to the cathode; if they collide with the cathode, they heat up it. The sintering process by plasma described in to PI 9603488-2 is an example.

The process of binder extraction by plasma described in this report consists of using the plasma technology to produce, besides the heating of the pieces, activated species. These activated species are fundamental for the kinetics increase of the process of binder extraction, in that the extraction happens in order of 10 times less than in the traditional processes The activated species are obtained by electrons collisions of high kinetic discharge, present in the electric discharge, with molecules of hydrogen. The presence of these activated species constitutes a fundamental difference between the process object of the patent application and the other processes of binder extraction.

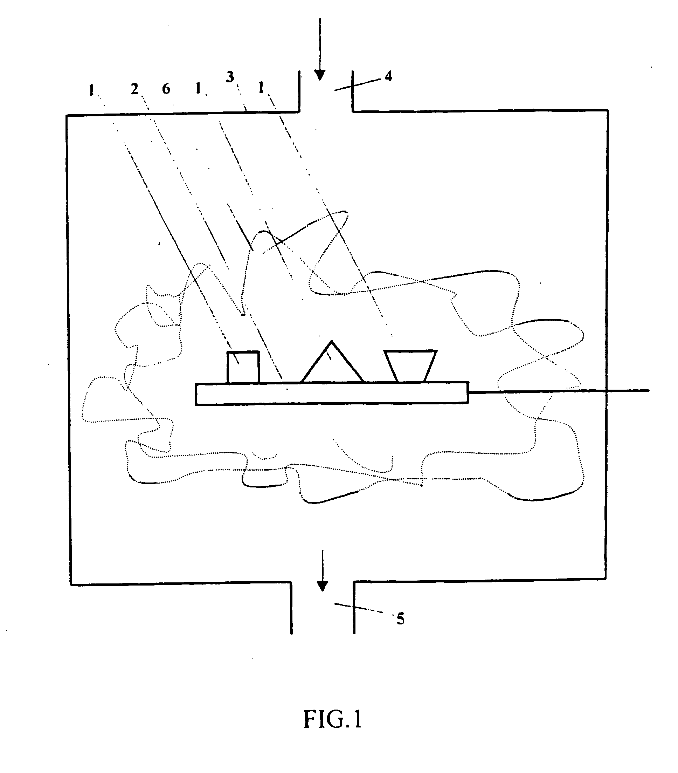

The process of binder extraction by plasma uses electric discharge in an environment of low pressure, plasma reactor, which contains a gaseous mixture comprising $H_2$ as main gas. The process is described in the drawing.

The drawing exhibits the simplified outline of the plasma reactor environment, used for the binder extraction, with the pieces (1) to be processed, the support (2) of the pieces (1), the body of the oven (3), the entrance (4) of the gaseous mixture, the vacuum system (5) and the plasma (6).

The pieces (1) to be processed are placed on the support (2). The group, support (2) and pieces (1), is treated by the plasma (6), and is heated up by the bombing of the ions and atoms or fast molecules or even by heat radiation starting from the cathode of the electric discharge circuit.

In the electric discharge, besides the ions and atoms or molecules with high kinetic energy, that are used for the components heating, there are also electrons that are much lighter than the ions and have much highest speeds. In this way three important reactions occur in the process of removing organic binder in injected pieces:

$$e + H_2 \rightarrow e + 2H$$

means that a high-speed electron collides with a $H_2$ molecule, producing the molecule dissociation, with kinetic energy loss of the electron. The other verified reaction:

$$e + H_2 \rightarrow e + H_2{}^*$$

means that a high-speed electron collides with a $H_2$ molecule, producing the excitement of this molecule, with kinetic energy loss of the electron. Another observed reaction is:

$$e + H_2 \rightarrow 2e + H_2{}^+$$

which means that a high-speed electron collides with a $H_2$ molecule, producing a molecular ion of hydrogen, with kinetic energy loss of the electron.

As a result of those reactions, the gaseous environment of the oven (3) contains particles like atomic hydrogen or hydrogen molecule, in a high potential energy level, and contains, in addition, the molecular ion of hydrogen. The first two reactions presented above constitute the chemical part of the thermochemical process of removal of the binder, while the third reaction is responsible for the thermal part of the process, i.e. it is responsible for the pieces heating. All those species are high chemical reactivity particles. Thus, once in contact with the binder of the injected piece (1), they produce an activated chemical reaction, breaking the carbonic chain of the organic material in a much smaller time than the conventional processes. The result is that carbon and volatile hydrogen are eliminated from the reactor environment (3) by the vacuum bomb (5). It is important to point out that other atomic or molecular gases, like oxygen, can also be used to obtain activated species.

Besides the smallest time for extraction of the binder, the smallest energy consumption, and the smallest pollution levels of the process here described, another characteristic is that the same plasma oven used for extraction of the binder may also be used for sintering the pieces by plasma. In this way, after the removal of the binder by plasma, one just needs to adjust the oven to accomplish the plasma sintering, in particular by changing the gases and the temperature conditions and internal oven pressure. As a consequence, the extraction of the binder and the sintering are done in the same equipment and in a same thermal cycle, with economy of energy, with smaller investment, and in much less time.

The process here described, compared to the existent processes, extracts the binder in times up to 10 times less. Besides, it is a process much less polluting, because the residues are gaseous components of small carbon chains and hydrogen. The process can be monitored and automated, since the removal of the binder can be controlled by mass spectrometry or optic spectrometry, defining the final point of the process accurately. It is possible to execute the removal of the binder and the plasma sintering in the same reactor (3), allowing the process to take place in a same thermal cycle.

## Claims

1. PROCESS EXTRACTION BY PLASMA OF A BINDER IN PIECES OBTAINED FROM POWDERS MOULDED BY INJECTION, **characterized in that** it is a thermochemical process carried out in a plasma reactor that uses a gaseous mixture containing hydrogen at low pressure, in which electric discharges, acting on hydrogen, promote plasma formation (6) containing activated species, consisting of atomic hydrogen, hydrogen molecule in a high potential energy state, and the molecular ion of hydrogen, which serve for heating up the pieces (1) placed in the support (2) inside the oven (3), to provoke the chemical decomposition and removal of the binder in the interior of the pieces (1), to increase the kinetics of extraction of the binder and to significantly reduce the necessary extraction time.

2. PROCESS EXTRACTION BY PLASMA OF A BINDER in accordance with claim 1, **characterized by** the fact that said plasma additionally contains other atomic or molecular gases, like argon, oxygen, or nitrogen in variable proportions, which produce activated species for binder extraction by plasma.

3. PROCESS EXTRACTION BY PLASMA OF A BINDER in accordance with claim 1, **characterized in that** the binder to be extracted is anyone of the binders used in the production technology of powders metallic and/or ceramic injected pieces, including mixtures of waxes and other polymeric ones e. g. polyethylene, polypropylene, polyacetate and other organic binders.

## Patentansprüche

1. Verfahren zur Plasmaextraktion eines Bindemittels in Teilen, die aus Pulvern erhalten werden, die durch Spritzgießen geformt wurden, **dadurch gekennzeichnet, dass** es ein thermochemisches Verfahren ist, das in einem Plasmareaktor ausgeführt wird, der eine gasförmige Mischung einsetzt, die Wasserstoff auf niedrigem Druck enthält, wobei auf Wasserstoff einwirkende elektrische Entladungen die Ausbildung des Plasmas (6) fördern, das aktivierte Teilchen enthält, die aus atomarem Wasserstoff bestehen, aus Wasserstoffmolekülen im Zustand mit hoher potentieller Energie, und Wasserstoffmolekülionen, die zum Erwärmen der Teile (1) dienen, die in der Halterung (2) innerhalb des Ofens (3) angeordnet sind, um die chemische Zersetzung und das Entfernen des Bindemittels im Inneren der Teile (1) zu bewirken, um die Extraktionskinetik des Bindemittels zu erhöhen, und um signifikant die erforderliche Extraktionszeit zu verringern.

2. Verfahren zur Plasmaextraktion eines Bindemittels nach Anspruch 1, **dadurch gekennzeichnet, dass** das Plasma zusätzlich andere atomare oder molekulare Gase enthält, wie Argon, Sauerstoff, oder Stickstoff, in variablen Anteilen, welche aktivierte Teilchen zur Plasmaextraktion des Bindemittels erzeugen.

3. Verfahren zur Plasmaextraktion eines Bindemittels nach Anspruch 1, **dadurch gekennzeichnet, dass** das zu extrahierende Bindemittel irgendeines jener Bindemittel ist, die in der Herstellungstechnologie pulvermetallischer und/oder keramischer gespritzter Teile verwendet werden, einschließlich Mischungen aus Wachsen und anderer polymerer Bindemittel, beispielsweise Polyethylen, Polypropylen, Polyazetat und andere organische Bindemittel.

## Revendications

1.  Procédé d'extraction par plasma d'un liant dans des pièces obtenues à partir de poudres moulées par injection, **caractérisé en ce qu'**il s'agit d'un procédé thermochimique conduit dans un réacteur à plasma qui utilise un mélange gazeux contenant de l'hydrogène basse pression, dans lequel des décharges électriques, agissant sur l'hydrogène, favorisent la formation du plasma (6) contenant des espèces activées, consistant en 'hydrogène atomique, 'hydrogène moléculaire dans un état d'énergie potentielle élevé, et l'ion moléculaire de l'hydrogène, qui servent à chauffer les pièces (1) placées dans le support (2) à l'intérieur du four (3), pour provoquer la décomposition chimique et l'élimination du liant à l'intérieur des pièces (1), afin d'augmenter la cinétique d'extraction du liant et réduire de façon significative la durée d'extraction nécessaire.

2.  Procédé d'extraction par plasma d'un liant selon la revendication 1, **caractérisé en ce que** ledit plasma contient en outre d'autres gaz atomiques ou moléculaires, comme l'argon, l'oxygène ou l'azote, dans des proportions variables, lesquels produisent des espèces activées pour l'extraction du liant par plasma.

3.  Procédé d'extraction par plasma d'un liant selon la revendication 1, **caractérisé en ce que** le liant à extraire est l'un quelconque des liants utilisés dans la technologie de production des pièces métalliques et/ou céramiques moulées par injection de poudre, y compris des mélanges de cires et d'autres polymères, par exemple du polyéthylène, du polypropylène, du polyacétate et d'autres liants organiques.

FIG.1